# EUROPEAN PATENT APPLICATION

(11) **EP 1 406 192 A1**
(43) Date of publication of application: **07.04.2004**
(21) Application number: 02730846.9
(22) Date of filing: 31.05.2002
(51) Int. Cl.: G06F 17/60

(54) **CLEARANCE SYSTEM**

(30) Priority: 31.05.2001 JP 2001163803
(71) Applicant: Aruze Corp., Tokyo (JP)
(72) Inventor: FUJIMOTO, Jun c/o Aruze Corporation, Koto-ku, Tokyo 135-0063 (JP); HARUTA, Masahiko c/o Aruze Corporation, Koto-ku, Tokyo 135-0063 (JP)
(74) Representative: Grünecker, Kinkeldey, Stockmair & Schwanhäusser Anwaltssozietät
(86) International application number: PCT/JP2002/005375
(87) International publication number: WO 2002/097695

(57) **Abstract**

An object of the invention is to provide a payment system and so on that enables the enjoyment of offered services in a plurality of facilities with a simple procedure. The invention relates to a payment system comprising a plurality of facility terminals placed in a plurality of facilities and a control device configured to be capable of communicating with the plurality of facility terminals. The control device includes a portable identification medium issuer configured to issue a portable identification medium to a customer; amemory configured to memorize a customer ID, a prepaid money balance representing the amount of money prepaid by the customer and a portable identification medium ID, while associating with each other; a determiner configured to determine, when receiving a payment request including the portable identification medium ID and the amount of money to be paid from the facility terminal, whether or not the payment can be executed using the portable identification medium by comparing the prepaid money balance associated with the portable identification medium ID with the amount of money to be paid; a payment response transmitter configured to transmit a payment response including the determination result to the facility terminal; an updater configured to update the prepaid money balance stored in the memory when it is determined that the payment can be executed; and a reimburser configured to reimburse the amount of money to be paid to the facility terminal when it is determined that the payment can be executed. The facility terminal includes a payment request transmitter configured to read the portable identification medium ID from the portable identification medium and to transmit the payment request including the read portable identification medium ID and the amount of money to be paid to the control device; and a display configured to display whether or not the payment can be executed in accordance with the payment response received from the control device.

## Description

### Technical field

The present invention relates to a payment (clearance) system and a payment (clearance) method for making a payment in a plurality of facilities. The invention relates to a payment system and a payment method for making a payment in, for example, a multiplex leisure area or a multiplex leisure facility such as a hotel, a casino, a shopping mall or the like, such as those that can be seen, for the example, in Las Vegas.

### Background Art

As a result of development as a tourist spot where every member of family can enjoy themselves, the present Las Vegas has changed into a multiplex leisure area where a plurality of facilities such as hotels, casinos, shopping malls, and amusement parks are closely packed and integrated. In such multiplex leisure areas, customers go to various desired facilities using a hotel as a base, enjoy receiving desired services, which are offered in the respective facilities, and enjoy shopping for desired articles.

Also, each of the hotels is itself formed as a multiplex leisure facility, and it is arranged so that customers are able to enjoy receiving services and shopping in facilities within the hotel without leaving the hotel.

Customers may pay for the services offered and articles purchased in the respective facilities in cash, or, by using a credit or debit card or the like.

However, in conventional multiplex leisure areas or multiplex leisure facilities, since it is necessary to make a payment in each facility, that customers are often inconvenienced by having to make a payment in cash or with a credit card or the like in each facility on an as-needed basis.

Particularly, the procedure of credit card payment has the inconvenience in that card certification and signature are required with each payment in each facility. Also, in the case of payment with a credit card, when each member of a family receives different services in different facilities at a similar time, it is necessary that each member of the family possess a credit card. However, such a family is rare.

Also, in a facility such as a games hall, there may be a case that a minor cannot enjoy its services unless the minor him/herself possesses cash. Resultingly, someone who can pay has to accompany him/her. In such a case, the companion may become bored

Further, since payments are made at each facility, it is difficult to calculate how much money each family member spent, which can result in an unexpected exceeding of the budget.

As described above, problems in the case of a family trip or the like are given, however, similar budget-exceeding problems and payment inconveniences may also occur in the case of an independent tour.

The invention has been proposed in view of these problems. Accordingly, an object of the invention is to provide a payment system and a payment method that have various merits such as a simplified procedure for a customer when enjoying a lot of services offered by facilities in a short time during a trip, and preventing the exceeding of a budget, and so on.

### Disclosure of the Invention

The first characteristic of the invention is summarized as a payment system comprising a plurality of facility terminals placed in a plurality of facilities and a control device configured to be capable of communicating with the plurality of facility terminals. The control device includes a portable identification medium issuer configured to issue a portable identification medium to a customer; a memory configured to memorize a customer ID identifying the customer, a prepaid money balance representing the amount of money prepaid by the customer and a portable identif ication medium ID identifying the portable identification medium, while associating with each other; a determiner configured to determine, when receiving a payment request including the portable identification medium ID and the amount of money to be paid from the facility terminal, whether or not the payment can be executed using the portable identification medium by comparing the prepaid money balance associated with the portable identification medium ID with the amount of money to be paid; a payment response transmitter configured to transmit a payment response including the determination result to the facility terminal; an updater configured to update the prepaid money balance stored in the memory when it is determined that the payment can be executed; and a reimburser configured to reimburse the amount of money to be paid to the facility terminal when it is determined that the payment can be executed. The facility terminal includes a payment request transmitter configured to read the portable identification medium ID from the portable identification medium and transmit the payment request including the read portable identification medium ID and the amount of money to be paid to the control device; and a display configured to display whether or not the payment can be executed in accordance with the payment response received from the control device.

The second characteristic of the invention is summarized in that, in the first characteristic of the invention, the memory memorizes the portable identification medium ID and a first facilities available balance representing the amount of money that allows a payment at the facility terminals, while associating with each other; and the determiner determines, when receiving the payment request including the portable identification medium ID and the amount of money to be paid from the facility terminal, whether or not the payment can be executed using the portable identification medium by comparing the first facilities available balance and the amount of money to be paid.

The third characteristic of the invention is summarized in that, in the first characteristic of the invention, the memory memorizes the portable identification medium ID and a second facilities available balance representing each of the amounts of money that allows a payment at the plurality of facility terminals, while associatingwith each other; and the determiner determines, when receiving the payment request including the portable identification medium ID and the amount of money to be paid from the facility terminal, whether or not the payment can be executed using the portable identification medium by comparing the second facilities available balance and the amount of money to be paid.

The fourth characteristic of the invention is summarized in that, in the first characteristic of the invention, the memory memorizes the portable identification medium ID and an inapplicable facility terminal ID representing the facility terminal which cannot execute the payment using the portable identification medium, while associating with each other; and the determiner determines, when receiving the payment request including the portable identification medium ID and the amount of money to be paid from the inapplicable facility terminal, that the payment cannot be executed using the portable identification medium.

The fifth characteristic of the invention is summarized in that, in the first characteristic of the invention, the portable identification medium issuer issues the plurality of portable identification media to the customer; and the memory memorizes the customer ID and each of the plurality of portable identification media IDs, while associating with each other.

The sixth characteristic of the invention is summarized in that, in the first characteristic of the invention, the memory memorizes the customer ID and a room number, while associating with each other; and the portable identification medium is capable of opening/closing a door of a room identified by the room number.

The seventh characteristic of the invention is summarized in that, in the first characteristic of the invention, the memory memorizes the facility terminal ID and a reimbursement day, while associating with each other; and the reimburser reimburses the amount of money to be paid to the facility terminal on the reimbursement day associated with the facility terminal ID.

The eighth characteristic of the invention is summarized in that, in the first characteristic of the invention, the memory memorizes the facility terminal ID and conditions of use, while associating with each other; and the determiner determines, when receiving the payment request including the portable identification medium ID and the amount of money to be paid from the facility terminal, whether or not the payment can be executed using the portable identification medium based on the conditions of use associated with the facility terminal ID.

The ninth characteristic of the invention is summarized in that, in the first characteristic of the invention, the portable identification medium is a non-contact IC card.

The tenth characteristic of the invention is summarized in that, in the first characteristic of the invention, the portable identification medium is an optical communication type portable terminal.

The eleventh characteristic of the invention is summarized as a payment method executed between a plurality of facility terminals placed in a plurality of facilities and a control device configured to be capable of communicating with the plurality of facility terminals, comprising the steps of: (A) issuing, in the control device, a portable identification medium to a customer; (B) memorizing, in the control device, a customer ID identifying the customer, a prepaid money balance representing the amount of money prepaid by the customer and a portable identification medium ID identifying the portable identification medium, while associating with each other; (C) reading, in the facility terminal, the portable identification medium ID from the portable identification medium and transmitting a payment request including the read portable identification medium ID and the amount of money to be paid to the control device; (D) determining, in the control device, whether or not the payment can be executed using the portable identification medium when the payment request is received from the facility terminal, by comparing the prepaid money balance associated with the portable identification medium ID with the amount of money to be paid; (E) transmitting, in the control device, a payment response including the determination result to the facility terminal; (F) updating, in the control device, the prepaid money balance when it is determined that the payment can be executed; (G) displaying, in the facility terminal, whether or not the payment can be executed in accordance with the payment response received from the control device; and (H) reimbursing, in the control device, the amount of money to be paid to the facility terminal when it is determined that the payment can be executed.

The twelfth characteristic of the invention is summarized in that, in the eleventh characteristic of the invention, the control device memorizes the portable identification medium ID and a first facilities available balance representing the amount of money that allows a payment at the facility terminals, while associating with each other; and in the step (D), the control device determines, when receiving the payment request including the portable identification medium ID and the amount of money to be paid from the facility terminal, whether or not the payment can be executed using the portable identification medium by comparing the first facilities available balance and the amount of money to be paid.

The thirteenth characteristic of the invention is summarized in that, in the eleventh characteristic of the invention, the control device memorizes the portable identification medium ID and a second facilities available balance representing the amount of money that allows a payment at each of the plurality of facility terminals, while associating with each other; and in the step (D), the control device determines, when receiving the payment request including the portable identification medium ID and the amount of money to be paid from the facility terminal, whether or not the payment can be executed using the portable identification medium by comparing the second facilities available balance and the amount of money to be paid.

The fourteenth characteristic of the invention is summarized in that, in the eleventh characteristic of the invention, the control device memorizes the portable identification medium ID and an inapplicable facility terminal ID representing a facility terminal which cannot execute the payment using the portable identification medium, while associating with each other; and in the step (D), the control device determines, when receiving the payment request including the portable identification medium ID and the amount of money to be paid from the inapplicable facility terminal, that the payment cannot be executed using the portable identification medium.

The fifteenth characteristic of the invention is summarized in that, in the eleventh characteristic of the invention, in the step (A), the control device issues the plurality of portable identification media to the customer; and in the step (B), the control device memorizes the customer ID and each of the plurality of portable identification media IDs, while associating with each other.

The sixteenth characteristic of the invention is summarized in that, in the eleventh characteristic of the invention, the control device memorizes the customer ID and a room number, while associating with each other; and the portable identification medium is capable of opening/closing a door of a room identified by the room number.

The seventeenth characteristic of the invention is summarized in that, in the eleventh characteristic of the invention, the control device memorizes the facility terminal ID and a reimbursement day, while associating with each other; and in the step (H), the control device reimburses the amount of money to be paid to the facility terminal on the reimbursement day associated with the facility terminal ID.

The eighteenth characteristic of the invention is summarized in that, in the eleventh characteristic of the invention, the control device memorizes the facility terminal ID and conditions of use, while associating with each other; and in the step (D), the control device determines, when receiving the payment request including the portable identification medium ID and the amount of money to be paid from the facility terminal, whether or not the payment can be executed using the portable identification medium based on the conditions of use associated with the facility terminal ID.

The nineteenth characteristic of the invention is summarized in that, in the eleventh characteristic of the invention, the portable identification medium is a non-contact IC card.

The twentieth characteristic of the invention is summarized in that, in the eleventh characteristic of the invention, the portable identification medium is an optical communication type portable terminal.

### Brief Description of the Drawings

FIG. 1 is a diagram illustrating the entire flow of a payment method to which a payment system according to an embodiment of the invention is applied.
FIG. 2 is a diagram illustrating the entire configuration of the payment system according to the embodiment of the invention.
FIG. 3 is a functional block diagram of a hotel computer in the payment system according to the embodiment of the invention.
FIG. 4 is a diagram showing an example of a record stored in a customer database in the payment system according to the embodiment of the invention.
FIG. 5 is a diagram showing an example of a record stored in a facility database in the payment system according to the embodiment of the invention.
FIG. 6 is a functional block diagram of a facility terminal in the payment system according to the embodiment of the invention.
FIG. 7 is a flowchart showing the operation of a hotel computer according to the embodiment of the invention at check-in.
FIG. 8 is a flowchart showing an operation in which a hotel computer and a facility terminal according to the embodiment of the invention make a payment on an offered service or a purchased article.
FIG. 9 is a flowchart showing an operation of a hotel computer according to the embodiment of the invention at check-out.
FIG. 10 is a flowchart showing an operation in which the hotel computer carries out a reimbursement processing to each facility, according to the embodiment of the invention.
FIG. 11 is a view showing an example of a facility which offers a casino game.
FIG. 12 is a view of an example of a chip used in a casino game.

### Best Mode for Carrying out the Invention

### (Embodiment of the Invention)

Now, a multi-facility payment system according to an embodiment of the invention will be described with reference to the drawings.

A multi-facility payment system according to the embodiment is a payment system that is used in a multiplex leisure area or a multiplex leisure facility such as a hotel, a casino, a shopping mall or the like, which can be seen, for example, in Las Vegas.

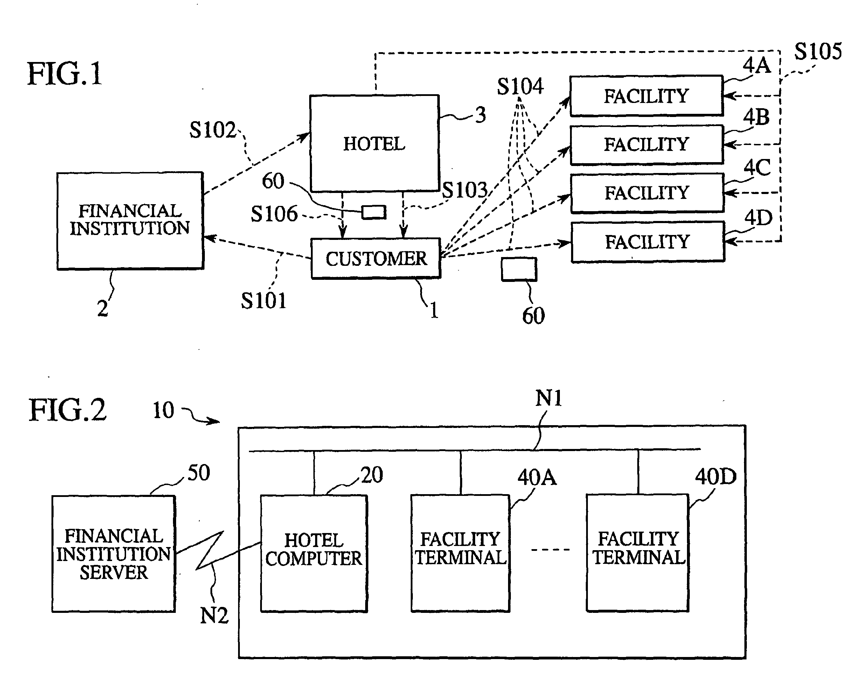

Referring to FIG. 1, the entire flow of a payment method, to which the multi-facility payment system according to the embodiment is applied, will be described.

In step 101, a customer 1 obtains a specific amount of money by carrying out a withdrawal using a cash card or a cashing procedure, using a credit card or the like at a financial institution (shop or ATM) 2.

In step 102, the customer 1, for example, when checking into a hotel 3, prepays (deposit) a specific amount of money to the hotel 3. Herein, the customer 1 may directly prepay a specific amount of money to the hotel 3 using a credit card or a debit card.

In step 103, the hotel 3 issues a multi-facility common portable identification medium (a room key or an original hotel card peculiar to the hotel 3 or the like) 60, which is usable in the respective facilities 4A-4D.

Also, in step 103, the hotel 3 may arrange it so that a credit card or a debit card of the customer 1 is payable commonly among the facilities 4A-4D. In this case, the credit card or debit card of the customer serves as the above-described multi-facility common portable identification medium 60.

In step 104, the customer 1 presents the multi-facility common portable identification medium 60 when paying for an offered service or making a payment for a purchased article in each of facilities 4A-4D in the hotel 3, or in each of the facilities 4A-4D such as a casino, a shopping mall, a game facility, or a duty-free shop which are affiliated with the hotel 3.

In step 105, each of the facilities 4A-4D makes a payment of money to be paid to the relevant facilities 4A-4D from a prepaid money that is prepaid to the hotel 3 based on the multi-facility common portable identification medium ID.

In step 106, for example, when checking-out from the hotel 3, the customer 1 receives the remainder of the prepaid money after completing the payment (receives the remainder of the money).

### ( Constitution of the payment system according to the embodiment)

FIG. 2 is a diagram illustrating the entire configuration of amulti-facility payment system 10 according to the embodiment of the invention. As shown in FIG. 2, the multi-facility payment system 10 according to the embodiment comprises a hotel computer 20 and facility terminals 40A-40D.

The hotel computer 20 and the facility terminals 40A-40D are linked with each other via a first network N1. Further, the hotel computer 20 is linked with a financial institution server 50 via a second network N2.

As for the first network N1, any bus-like, mesh-like or ring-like network is applicable. The second network N2 is a well-known network, which is used for communication when using a credit card, a debit card or the like.

The hotel computer 20 is, for example, placed on a counter, behind the counter or the like of the hotel 3. The hotel computer 20 constitutes a control device configured to be capable of communicating with a plurality of facility terminals placed in a plurality of facilities. The hotel computer 20 is a central device that performs the payment processing of the multi-facility payment system 10 according to the embodiment.

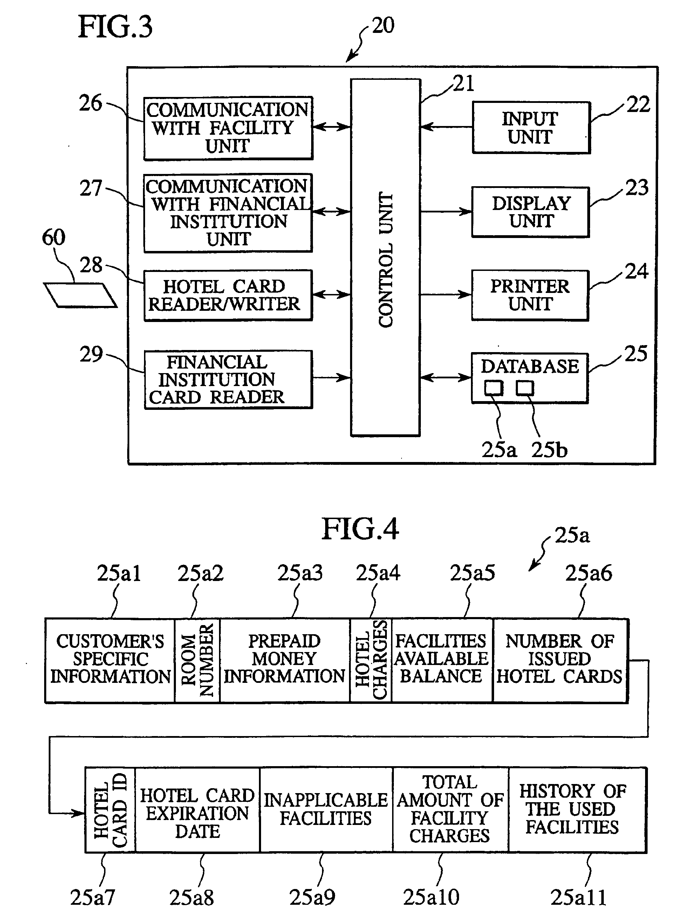

In particular, the hotel computer 20 has the main function of receiving a payment request from each of the facility terminals 40A-40D and responding with a payment response. The hotel computer 20 may be constituted of only one device, or a distributed processing structure constituted of a plurality of devices; as for the functions thereof, the hotel computer 20 has the configuration as shown in FIG. 3, which will be described later.

As shown in FIG. 3, the hotel computer 20 includes a control unit 21, an input unit 22, a display unit 23, a printer unit 24, a database 25, a communication with facility unit 26, a communication with financial institution unit 27, a hotel card reader/writer 28 and a financial institution card reader 29.

According to the embodiment, the hotel card reader/writer 28 constitutes a portable identification medium issuer configured to issue a portable identification medium 60 to the customer 1. The database 25 constitutes a memory configured to memorize a customer ID, a prepaid money balance indicating the amount of money prepaid (deposited) by the customer 1, and a portable identification medium ID, while associating with each other. The control unit 21 constitutes a determiner configured to determine, when receiving a payment request including the portable identification medium ID and the amount of money to be paid from a facility terminal 40, whether or not it is possible to make a payment using the portable identification medium 60 by comparing the prepaid money balance associated with the portable identification medium ID, with the amount of money to be paid. The communication with facility unit 26 constitutes a payment response transmitter configured to transmit a payment response including the determination result to the facility terminal 40. The control unit 21 constitutes an updater configured to update the prepaid money balance stored in the database 25 when it is determined that the above-described payment is possible. And, the communication with facility unit 26 constitutes a reimburser configured to reimburse (to make the payment for) the amount of money to be paid to the facility terminal 40 when it is determined that the above-described payment is possible.

The control unit 21 is connected with the input unit 22, the display unit 23, the printer unit 24, the database 25, the communication with facility unit 26, the communication with financial institution unit 27, the hotel card reader/writer 28 and the financial institution card reader 29. The control unit 21 completely controls the hotel computer 20 and is configured with, for example, a CPU, a ROM, a RAM and the like.

The input unit 22 is used for inputting predetermined information necessary for the checking in, checking out or the like of the customer 1 in the hotel 3. The input unit 22 is configured with, for example, a keyboard, a mouse or the like.

The display unit 23 is used as the monitor display for inputting information or for displaying a guidance message. The display unit 23 is configured with, for example, a liquid crystal display, a CRT display or the like.

The printer unit 24 is used for printing predetermined information at the checking out of the customer 1 in the hotel 3. The printer unit 24 is configured with an ordinary printer.

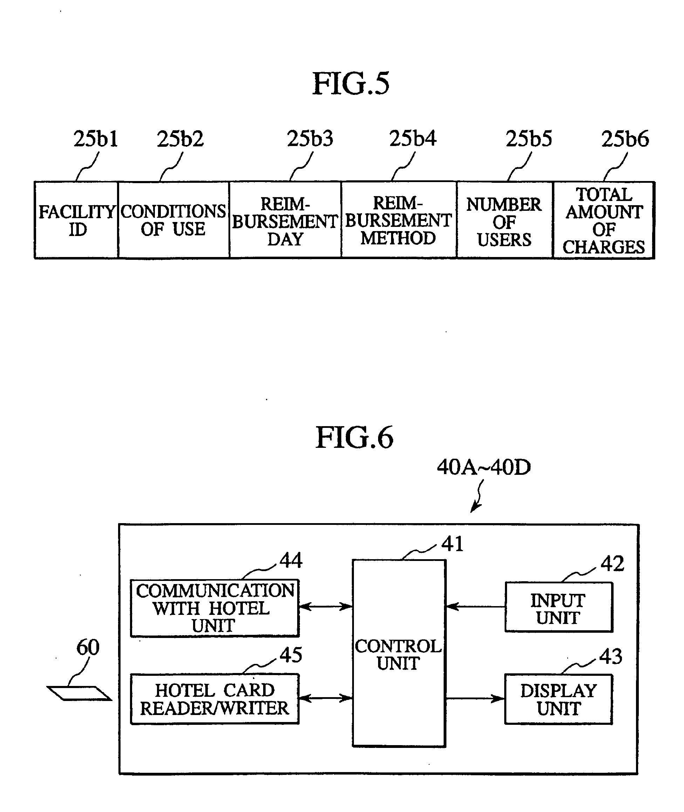

The database 25 includes a customer database 25a (refer to FIG. 4) concerning the customer (in other words, a common customer of the multi-facility 4A-4D) 1 of the hotel 3, and a facility database 25b (refer to FIG. 5) concerning the facilities or the like. The database 25 is configured with, for example, a large capacity external memory such as a HDD or the like.

FIG. 4 shows an example of a record per customer (in the case of a family, per family) that is stored in the customer database 25a.

Specifically, as shown in FIG. 4, the customer database 25a memorizes records that associate with a customer's specific information 25a1, a room number 25a2 , prepaid money information 25a3, hotel charges 25a4, a facilities available balance 25a5, the number of issued hotel cards 25a6, a hotel card ID 25a7, a hotel card expiration date 25a8, inapplicable facilities 25a9, the total amount of facility charges 25a10 and a history of the used facilities 25all.

The information field of the customer's specific information 25a1 stores specific information (information identifying the customer) concerning the customer such as name, address, and telephone number of the customer (in the case of lodging of a plurality of persons such as a family, representative) 1. Also, the information field of the customer's specific information 25a1 may include information such as age and sex, or information such as names of the family members.

The information field of the room number 25a2 stores a room number that indicates the room of the hotel 3 in which the customer 1 is lodging. Also, the information field of the room number 25a2 may store a plurality of room numbers.

The information field of the prepaid money information 25a3 stores information concerning the amount of money prepaid (deposited) at the hotel 3, or the prepaid method such as cash, credit card or debit card or the like.

The information field of the hotel charges 25a4 stores information concerning the hotel charges. The information field of the hotel charges 25a4 may store a hotel charge which is calculated based on the scheduled lodging days when checking into the hotel 3, or, may update the hotel charge with the increase of lodged days, to store therein.

The information field of the facilities available balance 25a5 stores the latest information concerning the fee available for the facilities 4A-4D in the multi-facility payment system 10 (first facilities available balance).

Further, the database 25 may memorize the fee available for each of the facilities 4A-4D (second facilities available balance).

The information field of the number of issued hotel cards 25a6 stores information concerning the number of the hotel cards (multi-facility common portable identification medium) 60 issued to the customer (family or the like) 1. In the case that the number of the issued hotel cards 60 is more than two, information in the following information fields 25a7-25a11 is repeatedly stored, equal to the number of the issued hotel cards 60.

The information field of the hotel card ID 25a7 stores information (inherent information) identifying the issued hotel card 60. The hotel card 60 ID may include information specifying the hotel 3. Also, the information specifying the hotel 3 may be different from the information identifying the hotel card 60.

The information field of the hotel card expiration date 25a8 stores expiration information concerning the period of time during which the services are available at each of the facilities 4A-4D using the issued hotel card 60, or, expiration information of the period of time during which articles can be purchased. For example, the information field of the hotel card expiration date 25a8 stores a scheduled checking-out date. Herein, as for the information field of the hotel card expiration date 25a8, although it is arranged so that different settings are permitted on each of the hotel cards 60 in the case that a plurality of hotel cards 60 is issued for each customer 1, it may be arranged so that every hotel card 60 is set commonly.

The information field of the inapplicable facilities 25a9 stores information regarding facilities 4A-4D, which are component elements of the multi-facility payment system 10 but are prohibited from making a payment for the offered services or the purchased article using the issued hotel card 60. For example, in the case that the customer 1 to whom the hotel card 60 is issued is a minor, information concerning facilities for adults only is set up in the information field of the inapplicable facilities 25a9. The information field of the inapplicable facilities 25a9 can be set up for every service and article in the facilities 4A-4D, or only specific services in the facilities 4A-4D may be set up.

The information field of the total amount of facility charges 25a10 stores the total amount of charges for offered services and prices of the articles purchased in each of the facilities 4A-4D using the issued hotel card 60.

The information field of the history of the used facilities 25a11 stores information concerning the history of the used facilities 4A-4D using the hotel card 60.

FIG. 5 shows an example of a record for a facility stored in the facility database 25b.

Specifically, as shown in FIG. 5, the facility database 25b memorizes records that associate with a facility ID 25b1, conditions of use 25b2, a reimbursement (settlement) day 25b3, a reimbursement method 25b4, a number of users 25b5 and a total amount of charges 25b6.

The information field of the facility ID 25b1 stores information identifying the facilities 4A-4D.

The information field of the conditions of use 25b2 stores conditions regarding the customer 1 who can use the facilities 4A-4D. For example, the information field of the conditions of use 25b2 stores conditions of use such as adult only access, or woman only access, with respect to the predetermined facilities 4A-4D.

Herein, in the information field of the conditions of use 25b2, conditions of use may be set up for each of the plurality of services that can be offered in the facilities 4A-4D; or conditions of use may be set up for a part of the kinds of the articles. In the information field of the above-described inapplicable facilities 25a9, the conditions of use is set up after referring to the conditions of use or the like set up in the information field of the conditions of use 25b2.

The information field of the reimbursement day 25b3 stores information concerning the date, or the date and time when the charges (a total amount of charges) of the facilities 4A-4D are reimbursed between the facilities 4A-4D and the hotel 3. For example, in the information field of the reimbursement day 25b3, the "end of the month" may be set as the reimbursement day for the amount of charges (a total amount of charges) of the facilities 4A-4D.

That is to say, as described above, the charges incurred in each of the facilities 4A-4D are collected by the hotel 3, therefore it is necessary to make a payment (reimbursement) from the hotel 3 to the respective facilities 4A-4D. The information field of the reimbursement day 25b3 stores the information concerning the reimbursement day.

The information field of the reimbursement method 25b4 stores a reimbursement method whereby an amount of charges (a total amount of charges) is reimbursed between the facilities 4A-4D and the hotel 3. For example, in the information field of the reimbursement method 25b4, a method (including specific information of an account etc) such as the giving and receiving of cash, or an account transfer payment can be set up.

The information field of the number of users 25b5 stores information concerning the number of users (number of customers) who have made a payment to the facilities 4A-4D using the hotel card 60 after the previous reimbursement. As for the information concerning the number of users, the information may be itemized on the basis of the kind or unit of the services and articles sold, or the like so as to be used in statistic processing at each of the facilities 4A-4D.

The information field of the total amount of charges 25b6 stores the total amount of charges to be paid that been incurred using the hotel card 60 after the previous reimbursement. As for the total amount of the reimbursed amount, the information may be itemized on the basis of the kind or unit of the services and articles sold, and the sum thereof so as to be used in statistic processing at each of the facilities 4A-4D.

The communication with facility unit 26 is configured to carry out communication with any one of the facility terminals 40A-40D via the first network N1. Any communication protocol or the like is applicable between the hotel computer 20 and the facility terminals 40A-40D.

The communication with financial institution unit 27 is configured to carry out communication with the financial institution server 50 via the second network N2.

The hotel card reader/writer 28 is configured to issue the hotel card 60 that is commonly usable in the facilities 4A-4D within the hotel 3 or the facilities 4A-4D that are affiliated with hotel 3; to collect the hotel card 60; to write a variety of information onto the hotel card 60; and to read the information stored in the hotel card 60.

The financial institution card reader 29 is configured to read the information stored in a credit card, a debit card or the like issued by the financial institution 2.

The hotel computer 20 configured with the above-described functional units may be a computer designated for the multi-facility payment system 10, or a computer that exists in the hotel 3 and is commonly used for booking control of the customer 1 or hotel guest control.

According to the embodiment, the hotel card 60 issued by the hotel 3 is used as the "multi-facility common portable identification medium". The hotel card 60 given to the customer 1 includes at least, information identifying the hotel 3 and information identifying the hotel card 60 of its own.

Each of the facility terminals 40A-40D is placed in the facilities 4A-4D within the hotel 3 or in the facilities 4A-4D affiliated with the hotel 3, respectively.

Each of the facility terminals 40A-40D transmits a payment request concerning the facilities 4A-4D to the hotel computer 20 and determines , in accordance with a payment response returned' from the hotel computer 20, whether or not the service is to be offered, the article is to be sold, and so on at the facilities 4A-4D.

Herein, in the facilities 4A-4D within the hotel 3, the game facilities, restaurants, souvenir shops, as well as a pay-TV or the like in the hotel room, may be included.

As shown in FIG. 6, each of the facility terminals 40A-40D includes a control unit 41, an input unit 42, a display unit 43, a communication with hotel unit 44 and a hotel card reader/writer 45.

According to the embodiment, the communication with hotel unit 44 and the hotel card reader/writer 45 constitute a payment request transmitter configured to read the portable identification medium ID from the portable identification medium 60, and to transmit a payment request including the read portable identification medium ID and an amount of money to be paid to the control device. The display unit 43 constitutes a display configured to display whether or not the payment is possible in accordance with the payment response received from the control device (hotel computer 20).

The control unit 41 is connected with the input unit 42, the display unit 43, the communication with hotel unit 44 and the hotel card reader/writer 45. The control unit 41 is for controlling the entirety of the facility terminals 4A-4D and is configured with, for example, a CPU, a ROM, a RAM or the like.

The input unit 42 is used for inputting a payment request for offered services and/or sold articles and an amount to be paid. The input unit 42 is configured with, for example, a keyboard and a mouse or the like. Herein, in the case that the kind of the offered service is only one, and the kind of the service charge is only one, the payment request may be carried out using the information read from the hotel card 60 by the hotel card reader/writer 45 as a trigger. In this case, the input unit 42 may be omitted.

The display unit 43 is used as an information input display, and for displaying a guidance message and a payment response for the payment request. The display unit 43 is configured with a liquid crystal display, a CRT display or the like.

The communication with hotel unit 44 is for communication with the hotel computer 20 via the first network N1.

The hotel card reader/writer 45 is for writing information to the above-described hotel card 60, or reading the information stored in the hotel card 60.

Although omitted in FIG. 6, each of the facility terminals 40A-40D may be provided with a database to arrange so that information concerning the history of the used facilities of the facilities 4A-4D may be stored therein.

The financial institution server 50 is placed in the financial institution 2 or affiliated facilities, and is a known server that performs the processing corresponding to a credit card payment request and the processing corresponding to a debit card payment request. Accordingly, the description of its internal constitution is omitted.

### (Operation of the payment system according to the embodiment)

The entire operation of the multi-facility payment system 10 of the embodiment having the configuration as described above can be understood from the above description. Hereinafter, the partial operation thereof will be described in detail.

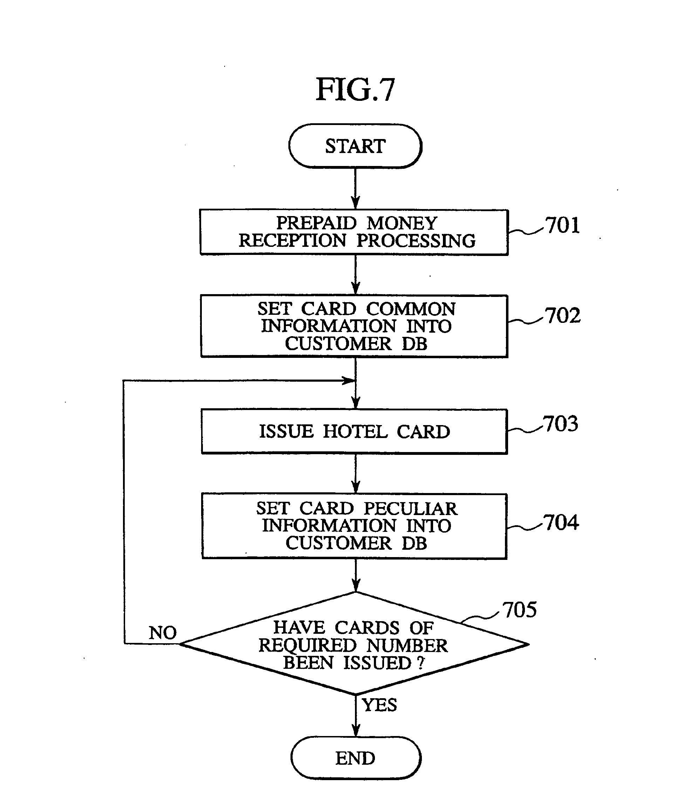

First of all, referring to the flowchart in FIG. 7, the operation of the hotel computer 2 at the checking in of the customer 1 at the hotel 3, and the operation of a front desk clerk of the hotel 3 at that time will be described.

The customer 1 who wants to use the prepayment system notifies his/her wish to the front desk clerk of the hotel 3, and the front desk clerk operates the input unit 22 of the hotel computer 20 to make the computer start a processing program (flowchart) shown in FIG. 7.

In step 701, the front desk clerk of the hotel 3 carries out the reception processing of money prepaid by the customer 1.

Specifically, in the case where the customer 1 prepays the money in cash, the front desk clerk operates the input unit 22 to input prepaid money information (including the amount of money prepaid).

In the case where the customer 1 prepays the money using a credit card payment, the front desk clerk makes the financial institution card reader 29 read the credit card of the customer 1 and inputs the amount of the prepaid money via the input unit 22 to make the financial institution server 50 perform the credit card payment.

Further, in the case that the customer 1 prepays the money using a debit card payment, the front desk clerk makes the financial institution card reader 29 read the debit card of the customer 1 and inputs the amount of the prepaid money via the input unit 22 to make the financial institution server 50 perform the debit card payment.

In FIG. 3, only one financial institution card reader 29 is shown, however a plurality of financial institution card readers 29 may be placed in accordance with the type or the like of the acceptable credit cards and debit cards. Also, a plurality of financial institution servers 50 may be placed for each of corresponding financial institutions 2 or each group of corresponding financial institutions 2.

In step 702, the hotel computer 20 sets up information, which is common to every hotel card 60 issued to the customer 1 from the information concerning the customer 1, into the customer database 25a in accordance with the information inputted by the front desk clerk, or the like.

That is to say, the hotel computer 20 sets up the information from the information field of the customer's specific information 25a1 to the information field of the number of issued hotel cards 25a6 shown in FIG. 4.

In this case, it may be arranged so that the information from the database for booking control, which is not shown in the drawings, is diverted.

Also, as for the information field of the facilities available balance 25a5, it may be arranged so that the setting is carried out by a method of automatic calculation based on the information set in the information field of the prepaid money information 25a3 and the information field of the hotel charges 25a4.

In step 703, the hotel computer 20 issues a hotel card 60 via the hotel card reader/writer 28.

In step 704, the hotel computer 20 sets up the information peculiar to each of the hotel cards 60 issued in step 703 into the customer database 25a in accordance with the information inputted by the front desk clerk, or the like.

That is to say, the hotel computer 20 sets up the information 25a7 to 25a11 shown in FIG. 4.

Herein, the front desk clerk operates the input unit 22 in accordance with the inquiry result from the customer 1 to set up the information field of the inapplicable facilities 25a9. Also, the information field of the total amount of facility charges 25a10 and the information field of the history of the used facilities 25a11, or the like are set to the initial state.

In step 705, the hotel computer 20 checks whether or not the number of hotel cards 60 requested by the customer 1 have been issued.

When each hotel card 60 has not yet been issued, the hotel computer 20 returns to step 703 to issue the next hotel card 60.

Whereas, when each hotel card 60 has been issued, the processing at the check-in concerning the multi-facility payment system 10 is completed.

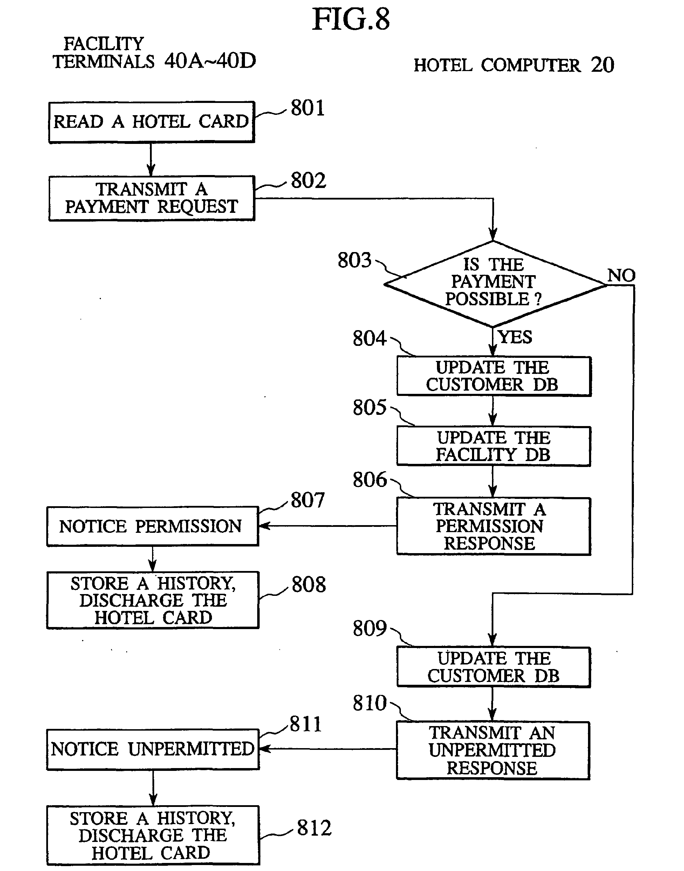

Secondary, referring to the sequence diagram in FIG. 8, the operation of the hotel computer 20 and the facility terminals 40A-40D when the customer 1 makes a payment for the services offered or the articles purchased in the facilities 4A-4D will be described.

In step 801, the cashier of a facility 4 makes the hotel card reader/writer 45 of the facility terminal 40 read the hotel card 60 possessed by the customer 1.

Herein, when the facility 4 sets the uniform charges of offered services or the prices of the articles, the terminal of the facility 40 can uses the prices stored in the control unit 41 as the amount of money to be paid. Whereas, when the charges of offered services and the prices of the articles are different from each other in the facility 4, the cashier has to operate the input unit 42 to input the amount of money to be paid.

In step 802, the facility terminal 40 generates a payment request that includes the information identifying the hotel 3 and the information identifying the hotel card 60, which are read from the hotel card 60, the information identifying the facility 4 internally managed in the control unit 41 and the information of the amount of money to be paid, and transmits the payment request to the hotel computer 20.

In step 803, the hotel computer 20 that received the payment request as described above determines whether or not the payment concerning the payment request is possible based on the records concerning the hotel card 60 stored in the customer database 25a.

Herein, in the following cases for example, the payment is determined as "impossible".

The first case is when the facilities available balance 25a5 in the customer database 25a is smaller than the amount of money to be paid that is presently being requested. The second case is when the hotel card 60 relevant to the payment request has the exceeded hotel card expiration date 25a8 in the customer database 25a. The third case is when the facility 4 transmitting the payment request falls under the category of the inapplicable facilities 25a9 in the customer database 25a. The fourth case is when the hotel card 60 relevant to the payment request is not set up in the customer database 25a (i.e. , the hotel card ID 25a7 that identifies the hotel card 60 relevant to the payment request does not reside in the customer database 25a), or the like.

When the payment as described above does not fall under the category of "impossible"; i.e., when the payment is available, in step 804, the hotel computer 20 updates the data of the customer database 25a in accordance with the contents of the payment relevant to the payment request. The hotel computer 20, in step 805, updates the content of the facility database 25b in accordance with the contents of the payment relevant to the payment request. The hotel computer 20, in step 806, transmits a payment response that represents permission for the payment request back to the facility terminal 40.

In the update of the customer database 25a in step 804, the facilities available balance 25a5 is reduced by the amount of money to be paid at this time; the total amount of facility charges 25a10 of each hotel card 60 is increased by the amount of money to be paid at this time; and the contents of histories concerning this particular payment is added to the history of the used facilities 25all.

Also, in the update of the facility database 25b in the step 805, the number of users 25b5 is increased by 1, and the total amount of charges 25b6 is increased by the amount of money to be paid at this time.

In step 807, the facility terminal 40, to which the payment response representing the permission is returned, notifies that the above-described payment has been permitted, for example, via the display unit 43, and in step 808, the histories of this particular payment are written in the hotel card 60 and the hotel card 60 is discharged.

After recognizing that the payment has been permitted, the cashier allows the customer 1 to enter the facility, or hands over the purchased article. Also the discharged hotel card 60 is returned to the customer 1.

On the other hand, when the above-described payment falls into the category of "impossible", in step 809, the hotel computer 20 updates the data of the customer database 25a; and in step 810, a payment response representing "not-permitted" is returned to the facility terminal 40.

Herein, the content of the updated customer database 25a (for example, contents of histories concerning a particular not-permitted payment), is added to the history of the used facilities 25all.

The facility terminal 40, to which the payment response representing "not-permitted" is returned, in step 811, notifies the fact that the above-described payment is not permitted, for example, by means of the display unit 43 and, in step 812, writes the histories regarding this incident to the hotel card 60, and discharges the hotel card 60.

The cashier, who has recognized the notification that the payment has been not permitted, forbids the customer 1 to enter the facility, or declines to hand over the article requested for purchase. Then the discharged hotel card 60 is returned to the customer 1.

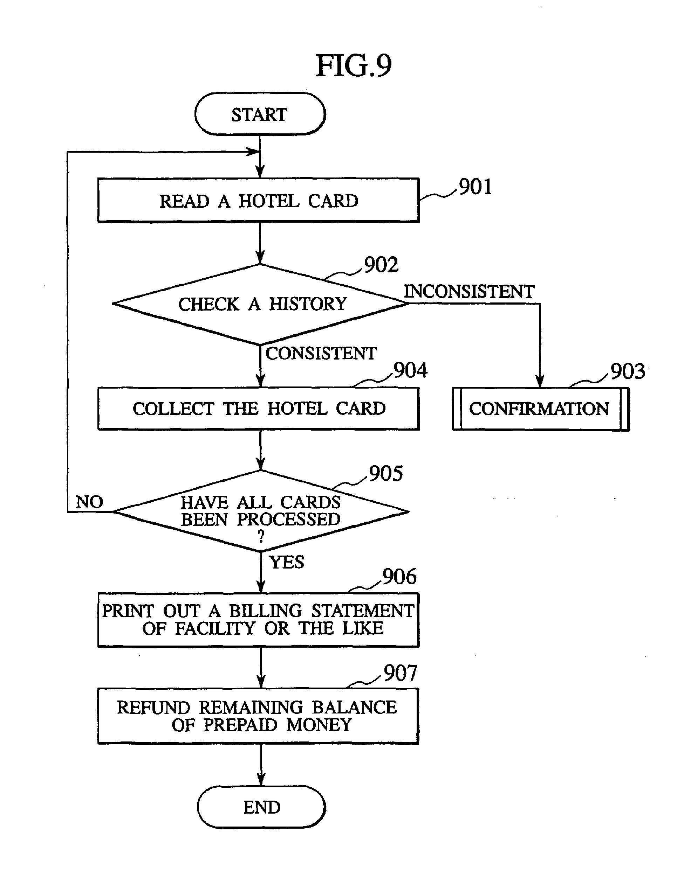

Thirdly, referring to the flowchart in FIG. 9, the operation of the hotel computer 20 when the customer 1 checks out from the hotel 3 and the operation of the front desk clerk of the hotel 3 at that time will be described.

The front desk clerk, who has been notified of the checking-out by the customer 1, operates the input unit 22 of the hotel computer 20 to make the hotel computer 20 start the processing program (flowchart) shown in FIG. 9.

In step 901, the hotel card reader/writer 28 of the hotel computer 20 is made to read the hotel card 60 possessed by the customer 1.

In step 902, the hotel computer 20 checks the history of the used facilities stored in the hotel card 60 and the history of the used facilities 25all in the customer database 25a.

In step 903, when both of the history of the used f acilities do not coincide with each other, the hotel computer 20 makes the display unit 23 display this fact. As a result, the front desk clerk can perform an operation to confirm the state of use by means of contact with the facilities 4A-4D, or communication with the facility terminals 40A-40D.

On the other hand, in step 904, when both of the histories of the used facilities coincide with each other, the hotel computer 20 collects the hotel card 60.

In step 905, the hotel computer 20 determines whether or not the above-described process has been completed on every hotel card 60 issued to the customer (family, customer group) 1. If not yet completed, the computer returns to the above-described step 901.

When it is confirmed that both of the histories of the used facilities coincide with each other on every issued hotel card 60, in step 906, the hotel computer 20 makes the printing unit 24 print out a billing statement of the facility. In step 907, when there remains any facilities available balance (balance of prepaid money), the front desk clerk carries out refund processing of the money to complete the series of the processing shown in FIG. 9.

As for the printing of the billing statement of the facility, it is preferred that the billing statement of the facilities used on each issued hotel card 60 is printed out. Even when the initial prepayment is made using a credit card or a debit card, it may be allowed to return the money in cash. Further, the return of money by transfer may be applied for.

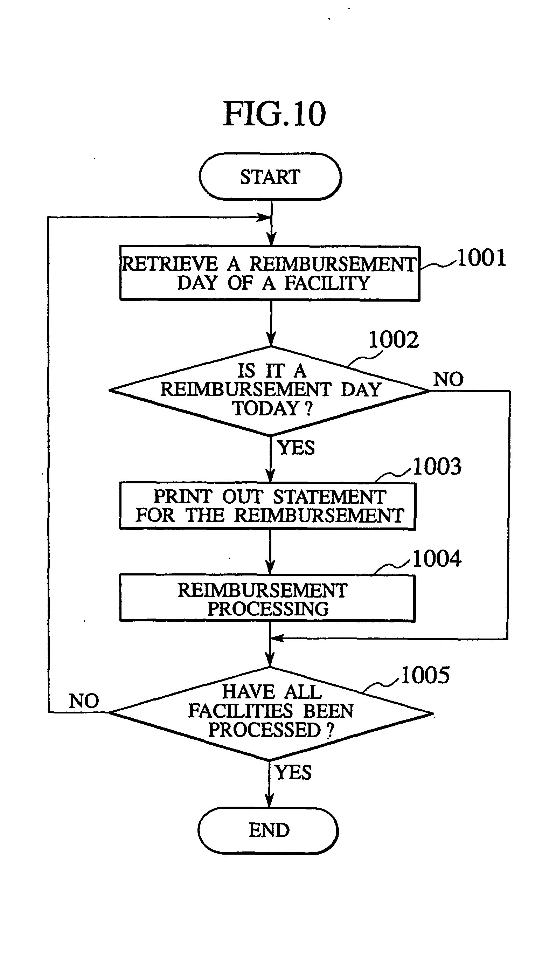

Next, referring to the flowchart in FIG. 10, the reimbursing operation to the facilities 4A-4D carried out by the hotel computer 20 will be described.

The hotel computer 20 starts, automatically at a predetermined date and time (for example, at 9 o'clock every day) or by starting up operation inputted by an operator, the processing program (flowchart) shown in FIG. 10, for example.

In step 1001, the hotel computer 20 retrieves the information of the reimbursement day 25b3 of a facility from the facility database 25b. In step 1002, the hotel computer 20 determines whether or not the day is the reimbursement day.

When the day is the reimbursement day with the facilities 4A-4D, in step 1003, the hotel computer 20 makes the printing unit 24 print out a statement for the reimbursement based on the contents of the facility database 25b. In step 1004, the reimburse processing of the total amount of charges 25b6 is carried out in accordance with the reimburse method 25b4 in the facility database 25b.

For example, when the information of the reimbursement method 25b4 instructs the transfer of money, the hotel computer 20 carries out the transfer processing of the money to the financial institution server 50 via the communication with financial institution unit 27. Also, when the information of the reimbursement method 25b4 instructs the giving and receiving of cash (irrespective of method), the hotel computer 20 makes a cash controller (omitted in FIG. 3) or the like discharge the money equivalent to the total amount of the money to be paid. When the facilities to be paid for are the facilities 4A-4D within the hotel 3, the information of the reimbursement method 25b4 may instruct such a reimbursement method so that the money information is transferred to an accountant computer (not shown in the drawings) of the hotel 3, or the like.

In step 1005, the hotel computer 20 checks whether the reimbursement processing of every facility 4A-4D has been completed. When all reimbursement processing has not yet been completed, the operation returns to the step 1001; whereas, when all reimbursement processing has been completed, the series of processing in FIG. 10 is terminated.

### (Effect of the payment system according to the embodiment)

According to the multi-facility payment system 10 of the embodiment, various effects can be obtained as described below.

According to the multi-facility payment system 10 of the embodiment, the control unit 21 determines, when receiving a payment request including the portable identification medium ID and the amount of money to be paid from a facility terminal 40, whether or not the payment can be executed using the portable identification medium (hotel card) 60 by comparing the prepaid money balance associated with the portable identification medium ID with the amount of money to be paid, therefore the customer can enjoy shopping, and the services offered by the facilities 4A-4D using a hotel card 60 without the need for a payment procedure using personal certification at each of the facilities 4A-4D; different from the case wherein a credit card, a debit card or the like is used.

According to the multi-facility payment system 10 of the embodiment, since the upper limit that allows shopping and the use of the services offered by the facilities 4A-4D is limited within the prepaid money balance, it is possible to prevent the budget from being exceeded during a trip or the like.

According to multi-facility payment system 10 of the embodiment, since the customer 1 can use the facilities 4A-4D without carrying cash, it is possible to increase security. Even when the hotel card suffers theft or the like, it is possible to prevent the thief from using the card exceeding the prepaid money balance.

In addition, according to the multi-facility payment system 10 of the embodiment, since the use of the hotel card 60 is also limited to the facilities 4A-4D affiliated with the hotel 3 or the like, it is possible to minimize financial damage. Also, even when a thief attempts to use the hotel card 60, since the hotel card 60 is available only to the facilities 4A-4D affiliated with hotel 3 or the like, it is easy to detect the fact. Further, it is possible to prohibit the use of the hotel card 60 by inputting prohibition information into the hotel computer 20.

According to the multi-facility payment system 10 of the embodiment, since the hotel card reader/writer 28 issues a plurality of portable ID media (hotel card) 60 to the customer 1, and the database 25 memorizes the customer ID and the plurality of portable identification media IDs, while associating with each other, it is possible to issue the plurality of hotel cards 60 so as to allow use of the same prepaid money; accordingly, it is effective for a small group trip such as a family trip.

According to the multi-facility payment system 10 of the embodiment, the database 25 memorizes the portable identification medium ID and the inapplicable facility terminal ID, while associating with each other, and the control unit 21 determines, when receiving a payment request including the portable identification medium ID and the amount of money to be paid from the inapplicable facility terminal, that the payment cannot be executed using the portable identification medium (hotel card) 60 in the inapplicable facility terminal, therefore it is possible to set up the available facilities and the kinds of services on each hotel card 60 freely.

For example, according to the multi-facility payment system 10 of the embodiment, it is possible to set the hotel card 60 of a minor who is prohibited from entering the casinos so that the hotel card 60 cannot be used for casinos. Further, according to the multi-facility payment system 10 of the embodiment, for example, regarding the video service of the hotel 3, it is also possible to set up the hotel card 60 so that the minor cannot receive a video service ranked "X" (i.e. the video service for adults only).

It may be arranged so that the information of inapplicable facilities as described above is stored in the hotel card 60 to determine whether or not the payment can be executed without reference to the hotel computer 20 via the facility terminal 40.

According to the multi-facility payment system 10 of the embodiment, the database 25 memorizes the portable identification medium ID and the second facilities available balance, while associating with each other, and the control unit 21 determines, when receiving a payment request including the portable identification medium ID and the amount of money to be paid from the facility terminal 40, whether or not the payment can be executed using the portable identification medium 60 by comparing the second facilities available balance and the amount of money to be paid; therefore it is possible to allocate the balance of the amount of money prepaid by the customer 1 to the respective hotel cards 60, and to set up the upper limit of the amount of money available to the respective hotel cards 60.

According to multi-facility payment system 10 of the embodiment, since it is also possible to make the hotel card 60 function as a room key, it is easy for the hotel 3 to issue and control the hotel card 60; while, it is possible for the customer 1 to reduce the articles carried by him/her during time spent out with the hotel. Accordingly, both parties benefit from this advantage.

According to the multi-facility payment system 10 of the embodiment, since it is possible to create a database 25 regarding shopping information of the customer 1 or service information offered, the hotel 3 and the facility 4 can reflect this information to the future administrations, sales departments or the like. When a facility database including statistical data is built in addition to the facility database shown in FIG. 5, which has been described above, the above-described effects are extremely effective.

According to the multi-facility payment system 10 of the embodiment, since the hotel 3 executes the payment for the shopping and received services using the deposited money (prepaid money) , it is possible for each of the facilities 4A-4D to simplify the procedure and to commonly use a terminal such as a POS terminal or the like that allows for processing using the hotel card 60.

According to the multi-facility payment system 10 of the embodiment, even when various kinds of credit cards and debit cards are used, it is possible to reduce the number and the cost of terminals to be placed in the facilities 4A-4D.

### (Payment system according to another embodiment)

With respect to the payment system according to the invention, various modifications of the embodiment have been given in the above description of the embodiment. Furthermore, the following modifications of the embodiment are exemplified.

In the above-described embodiments, for example, an IC card or a magnetic card that allows reading/writing is assumed as a hotel card 60. However, a hotel card 60 that allows the reading of information only (for example, an embossed card), or, further, a hotel card, on which simply characters are printed, is also applicable.

Also, not only the hotel card 60 of a card-like configuration but also a hotel card of a rod-like configuration or the like may be adopted.

The hotel card 60 may be an optical communication type portable terminal. In this case, since the hotel computer 20 gives the hotel card 60 the function of the optical communication type portable terminal via optical communication such as an LED or the like with the optical communication type portable terminal possessed by the customer 1, it is not necessary to issue the hotel card 60, resulting in a reduction of the cost for issuing the hotel card. It may be arranged so that the optical communication type portable terminal is lent to the customer by the hotel 3.

The hotel card 60 may be equipped with a room key function, which is usable as a room key of the hotel 3.

The hotel card 60 may be a deposit card that is usable within the amount of money prepaid (deposited) to the hotel 3. Compared to a credit card, a hotel card 60 such as this has merit in that the damage due to theft is limited to the amount of prepaid money. Further, when the deposit amount at the hotel 3 increases owing to such a hotel card 60, the hotel card 60 can be widely distributed easily because the reliability of the hotel 3 is increased.

The hotel card 60 may be a gaming card (a card for gambling), which is used when playing slot machines or the like in a casino.

The hotel card 60 may have an intranet or Internet casino card function that is used to play a casino game via an intranet or the Internet.

The hotel card 60 may be a non-contact IC card using an IC tag or the like. In this case, since the hotel card 60 allows data communication via radio communication, the hotel card 60 can be used for making a payment on a vending machine or at a counter or the like, or for the operation of opening/closing a room door or the like.

The hotel card 60 may be configured to be usable in a plurality of grouped hotels. With this arrangement, in a casino and hotel quarter like Las Vegas, a single hotel card 60 can be used in the entire quarter. That is to say, by prepaying (deposit) money using the hotel card 60 at a hotel 3 in the above-described casino and hotel quarter, the customer 1 can use the hotel card 60 in another hotel 3 in the casino and hotel quarter.

In addition, it may be arranged, by embedding personal certification information such as facial portrait data, finger print data or a password of the customer 1 who possesses the hotel card 60 in the hotel card 60, so that the hotel computer 20 or facility terminal 40 can check between the registered personal certification information, which is controlled by the hotel computer 20, and the personal certification information stored in the hotel card 60.

Further, it may be arranged so that the facility terminals 40A-40D display the facial portrait based on the facial portrait data stored in the hotel card 60 handed over by the customer 1.

It may be arranged, when the facilities available balance (prepaid money balance) becomes 0 or smaller than a predetermined amount, so that the hotel computer 20 makes a notice to the display unit 23 or the like, and the front desk clerk can inform the returning customer 1.

The multi-facility payment system 10 according to the embodiment may be a system such that a hotel card 60 is issued to one customer (customer group or family). In this case, it may be arranged such that the hotel card 60 itself memorizes the facilities available balance (prepaid money balance), and that the facility terminal 40 transmits, after checking that the facilities available balance is enough, a payment request to the hotel computer 20.

It may be arranged so that the reimbursement processing between the hotel 3 and the facility 4A-4D is executed immediately after a payment request is transmitted by the hotel 3 and a payment response representing a permission is returned by the facilities 4A-4D (for example, via transfer processing or the like). That is to say, the reimbursement processing between the hotel 3 and the facilities 4A-4D can be executed at a desired time.

Not limited to a card that allows writing such as an IC card or a magnetic card, the hotel card 60 may be any type of card with which the customer 1 (relevant to the payment) can be identified, including a read-only card. For example, a credit card or a debit card may be used as a hotel card 60. In this case, the credit card ID or the debit card ID may be used for the purpose of customer control at the hotel computer 20. Although the credit card or the debit card is not issued by the hotel 3, it can be used for personal certification. Herein, the procedure that a credit card or a debit card is made into a state so as to be used in the same way as the hotel card 60 is defined as "issue" in the claims.

In the above descriptions, although the supplementary processing of the prepaid money has not been mentioned, it is needless to say that the multi-facility payment system 10 according to the embodiment may be configured such that the supplementary processing of the prepaid money is possible. In this case, the multi-facility payment system 10 performs the read processing of the hotel card 60 and the input processing of the supplementary amount of money to increase the facilities available balance by the supplementary amount of inputted money.

In the above-described embodiments, although an example, in which the facility for controlling the prepaid money is the hotel 3, is given, it may be arranged so that another facility controls the prepaid money. Further it may be arranged so that a third party institution, which does not offer any services or sell any articles, controls the prepaid money.

In the case where the third party institution controls the prepaid money, since the hotel card 60 can be used in the facilities within a hotel 3 other than the lodging hotel that is affiliated with the third party institution, it is possible to largely expand the available area of the hotel card 60.

Further, at the hotel 3 side, since it is not necessary to carry out the data control relevant to the control of the prepaid money or the procedure of certification or the like, it is possible to use the administrative computer, which is equivalent to the hotel computer 20, commonly among a larger number of facilities 4A-4D resulting in a reduction of the administration costs of the multi-facility payment system 10. Accordingly, even for medium or small-size hotels that have relatively small funds, it is possible to run the multi-facility payment system 10 by affiliating with the third party institution.

It may be arranged so that the facility terminals 40A-40D offering casino games are configured to monitor the flow of the medals and chips used in the casino games in real-time.

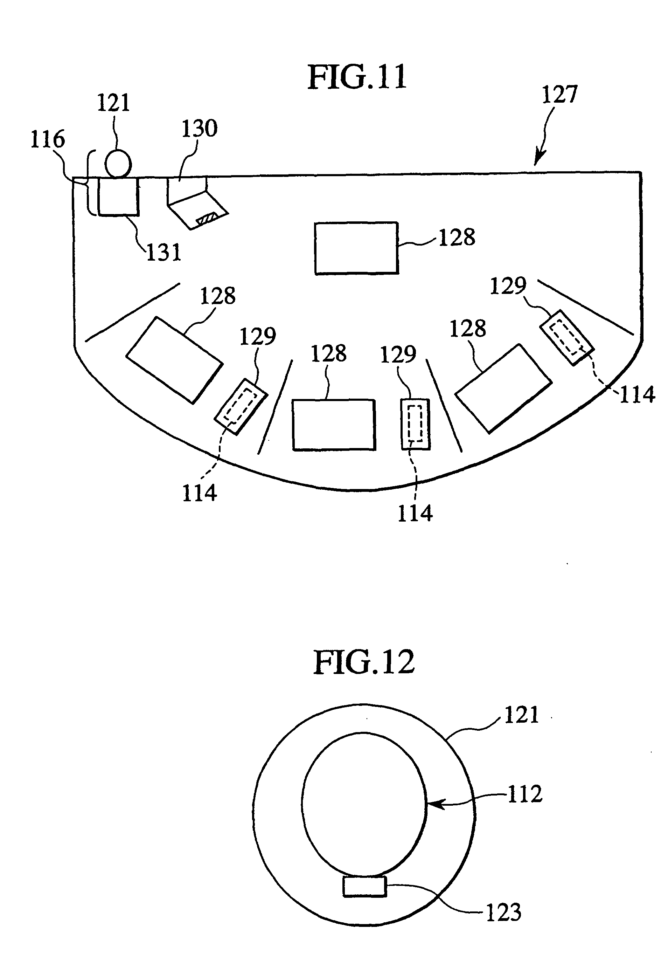

In this case, for example, the facility terminals 40A-40D are provided with a casino table 127 as shown in FIG. 11 respectively. The casino table 127 is provided with card delivery areas 128, betting areas 129, a card delivery area 130 and a chip collection area 116. By means of an IC tag monitor 131 of the chip collection area 116 and IC tag monitors 114 of the betting areas 129, it is possible to monitor the flow of the medals and chips used in the casino game in real-time. FIG. 12 shows an example of a chip 121 used herein. The chip 121, as shown in FIG. 12, is equipped with an antenna 112 and an IC tag 123.

As of now, in the facilities offering casino games, customer control and service control are carried out in a manner called "player tracking". A "player-tracking terminal" that supports the method is provided at the casino table (not shown in the drawing).

In the above-described embodiments, although the multi-facility payment system 10 for multiplex leisure area or multiplex leisure facility has been described, the technical idea of the invention is also applicable to a shopping quarter or the like.

### Industrial Applicability

As described above, according to the invention, it is possible to provide a payment system that has various merits for customers such that the procedure is simple, and the exceeding of a budget can be prevented when receiving services offered by a lot of facilities in a short period of time, such as a trip.

## Claims

1. A payment system comprising a plurality of facility terminals placed in a plurality of facilities and a control device configured to be capable of communicating with the plurality of facility terminals, wherein:
the control device includes:
a portable identification medium issuer configured to issue a portable identification medium to a customer;
a memory configured to memorize a customer ID identifying the customer, a prepaid money balance representing the amount of money prepaid by the customer and a portable identification medium ID identifying the portable identification medium, while associating with each other;
a determiner configured to determine, when receiving a payment request including the portable identification medium ID and the amount of money to be paid from the facility terminal, whether or not the payment can be executed using the portable identification medium by comparing the prepaid money balance associated with the portable identification medium ID with the amount of money to be paid;
a payment response transmitter configured to transmit a payment response including the determination result to the facility terminal;
an updater configured to update the prepaid money balance stored in the memory when it is determined that the payment can be executed; and
a reimburser configured to reimburse the amount of money to be paid to the facility terminal when it is determined that the payment can be executed; and
the facility terminal includes:
a payment request transmitter configured to read the portable identification medium ID from the portable identification medium and transmit the payment request including the read portable identification medium ID and the amount of money to be paid to the control device; and
a display configured to display whether or not the payment can be executed in accordance with the payment response received from the control device.

2. The payment system according to claim 1, wherein:
the memory memorizes the portable identification medium ID and a first facilities available balance representing the amount of money that allows a payment at the facility terminals, while associating with each other; and
the determiner determines, when receiving the payment request including the portable identification medium ID and the amount of money to be paid from the facility terminal, whether or not the payment can be executed using the portable identification medium by comparing the first facilities available balance and the amount of money to be paid.

3. The payment system according to claim 1, wherein:
the memory memorizes the portable identification medium ID and a second facilities available balance representing each of the amounts of money that allows a payment at the plurality of facility terminals, while associating with each other; and
the determiner determines, when receiving the payment request including the portable identification medium ID and the amount of money to be paid from the facility terminal, whether or not the payment can be executed using the portable identification medium by comparing the second facilities available balance and the amount of money to be paid.

4. The payment system according to claim 1, wherein:
the memory memorizes the portable identification medium ID and an inapplicable facility terminal ID representing the facility terminal which cannot execute the payment using the portable identification medium, while associating with each other; and
the determiner determines, when receiving the payment request including the portable identification medium ID and the amount of money to be paid from the inapplicable facility terminal, that the payment cannot be executed using the portable identification medium.

5. The payment system according to claim 1, wherein:
the portable identification medium issuer issues the plurality of portable identification media to the customer; and
the memory memorizes the customer ID and each of the plurality of portable identification media IDs, while associating with each other.

6. The payment system according to claim 1, wherein:
the memory memorizes the customer ID and a room number, while associating with each other; and
the portable identification medium is capable of opening/closing a door of a room identified by the room number.

7. The payment system according to claim 1, wherein:
the memory memorizes the facility terminal ID and a reimbursement day, while associating with each other; and
the reimburser reimburses the amount of money to be paid to the facility terminal on the reimbursement day associated with the facility terminal ID.

8. The payment system according to claim 1, wherein:
the memory memorizes the facility terminal ID and conditions of use, while associating with each other; and
the determiner determines, when receiving the payment request including the portable identification medium ID and the amount of money to be paid from the facility terminal, whether or not the payment can be executed using the portable identification medium based on the conditions of use associated with the facility terminal ID.

9. The payment system according to claim 1, wherein the portable identification medium is a non-contact IC card.

10. The payment system according to claim 1, wherein the portable identification medium is an optical communication type portable terminal.

11. A payment method executed between a plurality of facility terminals placed in a plurality of facilities and a control device configured to be capable of communicating with the plurality of facility terminals, comprising the steps of:
A) issuing, in the control device, a portable identification medium to a customer;
B) memorizing, in the control device, a customer ID identifying the customer, a prepaid money balance representing the amount of money prepaid by the customer and a portable identification medium ID identifying the portable identification medium, while associating with each other;
C) reading, in the facility terminal, the portable identification medium ID from the portable identification medium and transmitting a payment request including the read portable identification medium ID and the amount of money to be paid to the control device;
D) determining, in the control device, whether or not the payment can be executed using the portable identification medium when the payment request is received from the facility terminal, by comparing the prepaid money balance associated with the portable identification medium ID with the amount of money to be paid;
E) transmitting, in the control device, a payment response including the determination result to the facility terminal;
F) updating, in the control device, the prepaid money balance when it is determined that the payment can be executed;
G) displaying, in the facility terminal, whether or not the payment can be executed in accordance with the payment response received from the control device; and
H) reimbursing, in the control device, the amount of money to be paid to the facility terminal when it is determined that the payment can be executed.

12. The payment method according to claim 11, wherein:
the control device memorizes the portable identification medium ID and a first facilities available balance representing the amount of money that allows a payment at the facility terminals, while associating with each other; and
in the step D), the control device determines, when receiving the payment request including the portable identification medium ID and the amount of money to be paid from the facility terminal, whether or not the payment can be executed using the portable identification medium by comparing the first facilities available balance and the amount of money to be paid.

13. The payment method according to claim 11, wherein:
the control device memorizes the portable identification medium ID and a second facilities available balance representing the amount of money that allows a payment at each of the plurality of facility terminals, while associating with each other; and
in the step D), the control device determines, when receiving the payment request including the portable identification medium ID and the amount of money to be paid from the facility terminal, whether or not the payment can be executed using the portable identification medium by comparing the second facilities available balance and the amount of money to be paid.

14. The payment method according to claim 11, wherein:
the control device memorizes the portable identification medium ID and an inapplicable facility terminal ID representing a facility terminal which cannot execute the payment using the portable identification medium, while associating with each other; and
in the step D), the control device determines, when receiving the payment request including the portable identification medium ID and the amount of money to be paid from the inapplicable f acility terminal, that the payment cannot be executed using the portable identification medium.

15. The payment method according to claim 11, wherein:
in the step A), the control device issues the plurality of portable identification media to the customer; and
in the step B), the control device memorizes the customer ID and each of the plurality of portable identification media IDs, while associating with each other.

16. The payment method according to claim 11, wherein:
the control device memorizes the customer ID and a room number, while associating with each other; and
the portable identification medium is capable of opening/closing a door of a room identified by the room number.

17. The payment method according to claim 11, wherein:
the control device memorizes the facility terminal ID and a reimbursement day, while associating with each other; and
in the step H), the control device reimburses the amount of money to be paid to the facility terminal on the reimbursement day associated with the facility terminal ID.

18. The payment method according to claim 11, wherein:
the control device memorizes the facility terminal ID and conditions of use, while associating with each other; and
in the step D), the control device determines, when receiving the payment request including the portable identification medium ID and the amount of money to be paid from the facility terminal, whether or not the payment can be executed using the portable identification medium based on the conditions of use associated with the facility terminal ID.

19. The payment method according to claim 11, wherein the portable identification medium is a non-contact IC card.

20. The payment method according to claim 11, wherein the portable identification medium is an optical communication type portable terminal.
